# EUROPEAN PATENT SPECIFICATION

(11) **EP 1 157 732 B1**
(45) Date of publication and mention of the grant of the patent: **03.03.2004**
(21) Application number: 00201787.9
(22) Date of filing: 23.05.2000
(51) Int. Cl.: B01D 53/85, C02F 3/10

(54) **Device for purifying gases or liquids, such as air or water**
Vorrichtung zur Reinigung von Gasen und Flüssigkeiten, wie zum Beispiel Luft oder Wasser
Dispositif pour la purification des gaz et des liquides tel que de l'air ou de l'eau

(43) Date of publication of application: 28.11.2001
(73) Proprietor: Bonno Koers, Doesburg (NL)
(72) Inventor: Bonno Koers, Doesburg (NL)
(74) Representative: Lips, Hendrik Jan George, Ir.

(56) References cited:
- FR-A- 2 051 381
- NL-C- 1 007 019

## Description

The invention relates to a device for purifying gases, such as air in particular, or liquids, such as water in particular, said device comprising a chamber in which filter material is received, said chamber having intakes and outlets for the medium to be purified, said filter material being a mat having large open pores and being made of foamed plastic material, said mat being intended for absorbing micro organisms.

In a device of this type, as described in EP-A-0 190 801, a commercially available mat is employed, its one side being flat and its other side being provided with projecting portions so that that surface, seen in cross-section, has an undulated profile. The mat has a very large surface per unit of volume and has good adhesive properties for micro organisms. A number of such mats is placed on top of each other so that a plane surface of one mat contacts an undulating surface of the mat lying on it. Due to this, a certain free space remains between successive mats.

Although a good purifying result is achieved, there is the difficulty that the medium flowing through and along the mats experiences a considerable flow resistance.

The object of the invention is to remove this difficulty and to that end provides for, that the mat of foamed plastic material has a flat surface on both sides and is rolled-up under insertion of a supporting element made of - at least partly - undulated, mutually connected, resilient threads, in such a way that a certain distance between the parts of the mat radially following one another remains free by the presence of the supporting element and the rolled-up mat can be fittingly mounted in a supporting structure.

It has turned out, that the micro organisms, providing for purification of the medium flowing through the device, exert their action substantially at the surface of the mat. Due to the presence of the supporting element, the flow resistance exerted on the medium flowing through, is restricted considerably, even though a good purifying action is achieved by the presence of the micro organisms on the surface of the mat. Manufacturing such a device is relatively simple too, and thus inexpensive.

According to a further development of the invention, the supporting structure, in which the filter material is received, will be a pipe having a framework therein for supporting the filter material, the pipe being arranged vertically in the chamber.

The width of such a mat will be kept restricted in order to prevent the vertically arranged mat from deforming under influence of its weight. In order to achieve a sufficiently large capacity of a device, it can be provided for, that a number of pipes, every one of them containing filter material, are stacked on top of one another, to which purpose parts of the pipes can engage and support each other.

This also contributes to the fact that the mats can be easily replaced, if necessary. A contaminated mat can then be cleaned so that it can be used again.

In order to render the mat biologically active, when the mat is brought to use, a biomass is applied on it, such as in the form of a graft, for example. The composition of said graft will depend on the nature and the composition of the medium to be treated. During use, the size of the biomass will increase so that the optimum efficiency of the device will be achieved after some time.

The device can be used for purifying air containing volatile hydrocarbons. Then, water will be sprayed onto the mat from above, so that the water consumption is reduced to a minimum. There, the air will be led through the chamber from the bottom to the top.

There, means for keeping or bringing the pH-value of the recirculated water at the desired value can be present. It is also possible to add nutrients to the water for an optimum biological purification of the air flowing through the device.

The device can also be provided with measuring equipment for the temperature, the salinity and the pressure drop. By this, the most essential conditions of the surrounding for the micro organisms can be monitored.

The device can also be used for purifying water. Then, the water can flow through the device from the top to the bottom and air can be brought into the lower part of the chamber so that it will flow through the water to be purified from the bottom to the top.

Using a rolled-up strip of foamed plastic material in a biological filter is known per se from GB-A-1 281 874. There, the strips is wound in such a way, that successive windings are spaced apart across some distance. To that end, the strip will be heated during rolling it up, so that a more or less stiff unity is achieved. It is obvious that it can only be used with relatively small dimensions of the strip.

Using a rolled-up strip is further known from FR-A-2 051 381. However, therein a foil of plastic and an undulated foil are used, so that continuous channels are achieved.

The invention is further explained by way of an example, illustrated in the drawing, in which:
Fig. 1 shows diagrammatically a vertical cross-section of a device for purifying air; and
Fig. 2 shows diagrammatically a cross-section of a part of a filter material present in the device.

The device illustrated in the drawing comprises the cylindrical chamber 1 that can be made of glass-fibre reinforced plastic, for example. This material can be resistive against aggressive acids and biological activity. At its bottom side, the chamber 1 is closed-off by a baseplate 2, and at its top side by a lid 3, which can be pressed against the chamber, e.g. by a number of bolts, for closing it.

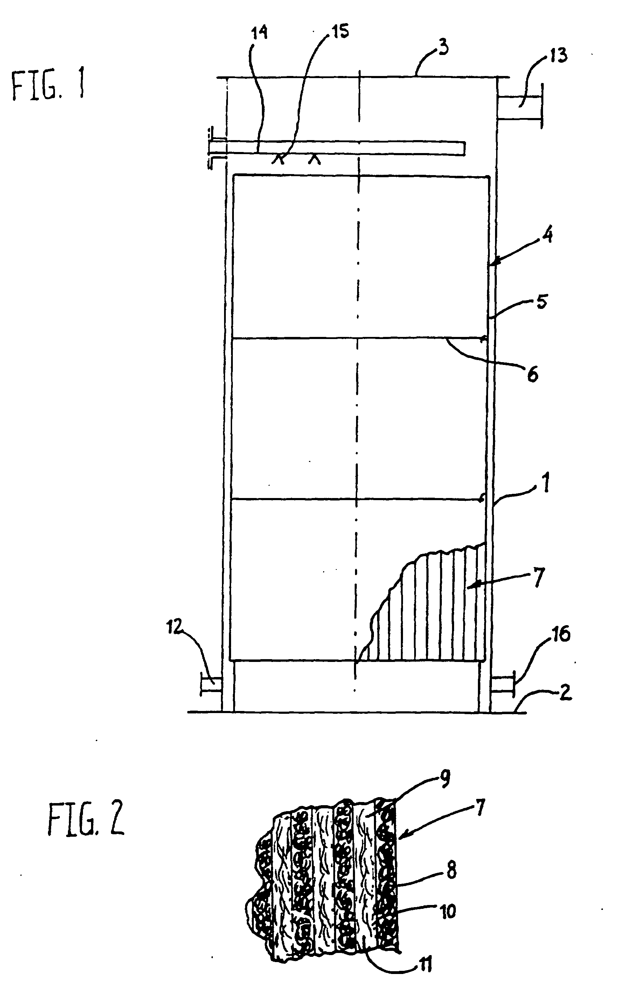

Within the chamber 1, there are three filter elements 4, each constituted by a pipe 5 being provided with a framework 6 at its bottom side and accommodating filter material 7. As illustrated in Fig. 2, the filter material 7 is obtained by rolling-up a mat 8 made of foamed plastic material together with a supporting element 9. The supporting element 9 is in particular formed by a netting of resilient threads mutually connected such as by welding or entwining. There, one can start from a very coarse open fabric of 10 threads to which undulated threads 11 are connected. A similar material is commercially available.

A certain distance between the parts of the mat radially following one another remains free by the presence of the supporting element 9. The rolled-up assembly of mat 8 and supporting element 9 is fittingly mounted in a pipe 5 for constituting a filter element 4.

The mat 8 can be made of polyurethane, polyethylene or a similar material.

The lower and upper edge of the stacked pipes 5 of a filter element 4 are designed such that the pipes 5 rest on each other, due to which the wall of the chamber 1 is only loaded to a small degree.

At its bottom side, the chamber 1 is provided with an air intake 12 and at the top side with an air outlet 13 for discharge of purified air.

Above the uppermost filter element 4 is a conduit 14 provided with one or more spray nozzles 15 for spraying water on it. At the bottom side of the chamber 1 the water is discharged by means of a conduit 16. The conduit 14 having the spray nozzles 15 can easily be removed when the filter elements 4 are to be replaced.

When the device will be used for purifying water, this will be brought onto the uppermost filterelement 4 from above. The water will then be distributed across the filter element 4 to flow downwards. The water is discharged from the lower end of the chamber 1. Air can be supplied to the lower end of the chamber 1, in such a way that the air moves upwards through the water.

It will be obvious, that only one single possible embodiment of a device according to the invention has been illustrated in the drawing and that only some possible applications have been described above. Many changes can be made without being beyond the inventive idea as it is defined in the claims.

## Claims

1. Device for purifying gases, such as air in particular, or liquids, such as water in particular, said device comprising a chamber (1) in which filter material (7) is incorporated, said chamber having intakes and outlets (12, 13) for the medium to be purified, said filter material (7) being a mat (8) having large open pores and being made of foamed plastic material, said mat being intended for absorbing micro organisms, **characterized in that** the mat (8) of foamed plastic material has a flat surface on both sides and is rolled-up under insertion of a supporting element (9) made of - at least partly - undulated, mutually connected, resilient threads (10, 11), in such a way that a certain distance between the parts of the mat (8) radially following one another remains free by the presence of the supporting element (9) and the rolled-up mat can be fittingly mounted in a supporting structure (5, 6).

2. Device according to claim 1, **characterized in that** the supporting structure, in which the filter material (7 is received, is a pipe (5) having a framework (6) therein for supporting the filter material (7), the pipe (5) being arranged vertically in the chamber (1).

3. Device according to claim 2, **characterized in that** a number of pipes (5), every one of them containing filter material (7), are stacked on top of one another, to which purpose parts of the pipes can engage and support each other.

4. Device according to one of the preceding claims, **characterized in that** a water supply conduit (14) being provided with one or more spray nozzles (15) is mounted above the filter material (7) for purifying air.

5. Device according to claim 4, **characterized in that** means for recirculating the sprayed water are provided.

## Patentansprüche

1. Vorrichtung zum Reinigen von Gasen, beispielsweise insbesondere Luft, oder von Flüssigkeiten, beispielsweise insbesondere Wasser, wobei die Vorrichtung eine Kammer (1) aufweist, in der Filtermaterial (7) enthalten ist, wobei die Kammer Einlässe und Auslässe (12,13) für das zu reinigende Medium hat, das Filtermaterial (7) eine Matte (8) mit großen offenen Poren ist und aus Kunststoffschaummaterial hergestellt ist, wobei die Matte zum Absorbieren von Mikroorganismen vorgesehen ist, **dadurch gekennzeichnet, daß** die Matte (8) aus Kunststoffschaummaterial eine flache Oberfläche auf beiden Seiten hat und unter Einsetzen eines Halterungs- bzw. Stützelements (9), das zumindest teilweise aus gewellten, untereinander verbundenen elastischen Fäden bzw. Strängen (10,11) hergestellt ist, derart aufgerollt ist, daß ein bestimmter Abstand zwischen den radial aufeinanderfolgenden Teilen der Matte (8) durch das Vorhandensein des Halterungselements (9) frei bleibt und die aufgerollte Matte durch Einsetzen in eine Halterungsstruktur (5,6) angebracht werden kann.

2. Vorrichtung nach Anspruch 1, **dadurch gekennzeichnet, daß** die Halterungsstruktur, in der das Filtermaterial (7) aufgenommen ist, ein Rohr (5) mit einem darin befindlichen Rahmen (6) zum Haltern des Filtermaterials (7) ist, wobei das Rohr (5) vertikal in der Kammer (1) angeordnet ist.

3. Vorrichtung nach Anspruch 2, **dadurch gekennzeichnet, daß** eine Anzahl Rohre (5), von denen jedes Filtermaterial (7) enthält, aufeinandergeschichtet sind, wobei Teile der Rohre zu diesem Zweck ineinandergreifen und einander haltern können.

4. Vorrichtung nach einem der vorangehenden Ansprüche, **dadurch gekennzeichnet, daß** eine Wasserzuführleitung (14), die mit einer oder mehreren Sprühdüsen (15) versehen ist, über dem Filtermaterial (7) zum Reinigen von Luft angebracht ist.

5. Vorrichtung nach Anspruch 4, **dadurch gekennzeichnet, daß** Mittel zum Rezirkulieren des gesprühten Wassers vorgesehen sind.

## Revendications

1. Dispositif pour épurer des gaz, tels qu'en particulier de l'air ou des liquides, tels que de l'eau en particulier, ledit dispositif comprenant une chambre (1) dans laquelle un matériau filtrant (7) est incorporé, ladite chambre ayant des admissions et des sorties (12, 13) pour le fluide à épurer, ledit matériau filtrant (7) étant un matelas de fibres (8) ayant de grands pores ouverts et étant formé de matière plastique rendue alvéolaire, ledit matelas de fibres étant prévu pour l'absorption de microorganismes, **caractérisé en ce que** le matelas de fibres (8) en matière plastique rendue alvéolaire présente une surface plate sur ses deux côtés et est soumis à un enroulement avec insertion d'un élément support (9), formé - au moins partiellement - de fils (10, 11) élastiques, reliés mutuellement, partiellement ondulés, de telle manière qu'une certaine distance, entre les parties de matelas de fibres (8) se suivant radialement les unes les autres, reste libre suite à la présence de l'élément support (9), et le matelas de fibres ayant été enroulé pouvant être monté de façon ajustée dans une structure support (5, 6).

2. Dispositif selon la revendication 1, **caractérisé en ce que** la structure support, dans laquelle le matériau filtrant (7) est logé, est un tube (5) ayant en son sein un cadre (6) supportant le matériau filtrant (7), le tube (5) étant agencé verticalement dans la chambre (1).

3. Dispositif selon la revendication 2, **caractérisé en ce qu'**une pluralité de tubes (5), dont chacun contient un matériau filtrant (7), sont empilés les uns au-dessus des autres, des parties des tubes pouvant à cette fin s'engager dans et se supporter les uns les autres.

4. Dispositif selon l'une des revendications précédentes, **caractérisé en ce qu'**un conduit d'alimentation en eau (14), muni d'une ou plusieurs buses de pulvérisation (15), est monté au-dessus du matériau filtrant (7), afin d'épurer l'air.

5. Dispositif selon la revendication 4, **caractérisé en ce que** des moyens sont prévus, pour assurer la re-circulation de l'eau pulvérisée.
